# EUROPEAN PATENT SPECIFICATION

(11) **EP 0 402 130 B1**
(45) Date of publication and mention of the grant of the patent: **09.08.1995**
(21) Application number: 90306183.6
(22) Date of filing: 07.06.1990
(51) Int. Cl.: G09G 3/36, H04N 3/12

(54) **Method and apparatus for driving color display device**
Methode und Vorrichtung zur Steuerung einer Farbanzeige
Méthode et dispositif pour contrôler un dispositif d'affichage à couleurs

(30) Priority: 08.06.1989 JP 146330/89
(43) Date of publication of application: 12.12.1990
(73) Proprietor: SHARP KABUSHIKI KAISHA, Osaka 545 (JP)
(72) Inventor: Maeda, Hiroshi Yamato-Ryo, Yamato-Koriyama-shi, Nara-ken (JP); Omori, Takuro, Ikoma-shi, Nara-ken (JP); Taniguchi, Koki, Osaka-shi, Osaka-fu (JP)
(74) Representative: Brown, Kenneth Richard

(56) References cited:
- EP-A- 0 260 146
- EP-A- 0 311 500
- REVIEW OF THE ELECTRICAL COMMUNICATIONS LABORATORIES, vol. 36, no. 4, July 1988, pages 395-401, Tokyo, JP; S.SAKAI et al: "A 10-In. Diagonal Active-Matrix Monochrome Liquid-Crystal Display"
- PATENT ABSTRACTS OF JAPAN, vol. 13, no. 112 (P-844), 17 March 1989; & JP-A-63287828

## Description

### BACKGROUND OF THE INVENTION

### 1. Field of the Invention

The present invention relates to a method and apparatus for driving a colour display device such as a colour liquid-crystal display device or a colour thin film electroluminescent display device.

### 2. Description of the Related Art

EP0260146 discloses "thinning-out" and pulse width modulation methods for driving pixels of a colour display to allow a greater number of colours to be generated. It is acknowledged however that the simple "thinning-out" method employed results in increased flickering at lower intensities.

EP0311500 discloses a display driver wherein, for a given word, pixel luminance values are sequentially read from an image memory to drive a display. For a two bit word the pixels are driven in alternating complementary checkerboard patterns to reduce flicker.

For a colour liquid-crystal display device, for example, a frame-selecting method has been known as one of the driving methods to allow an image to be displayed on screen at several tones with different luminance (see for example European Patent Application No. 90302435.4).

The frame-selecting method is designed to assume several frames as one period, activate pixels in several frames corresponding to desired display luminance data within the period and emit desired light, and visually acquire the averagely intermediate luminance in each period.

The present applicant has studied an improved art of this frame-selecting method. The improved art is designed to classify all pixels contained in a display device into groups in a manner to bring several pixels adjacent to one another into one group and correspond each pixel to be activated in one group to the different sequence of frames for the desired display luminance data, resulting in reducing flickers caused on screen.

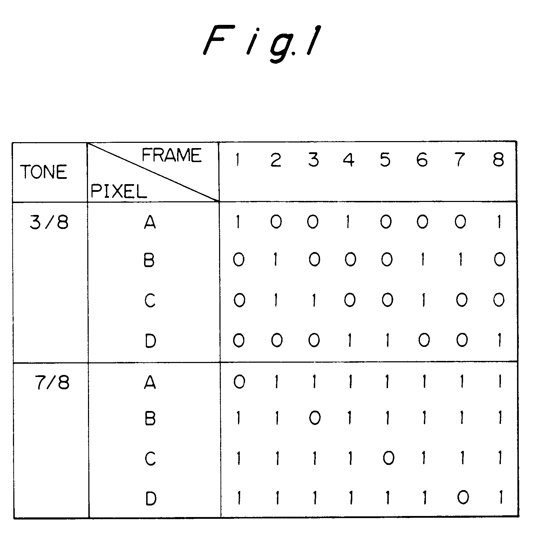

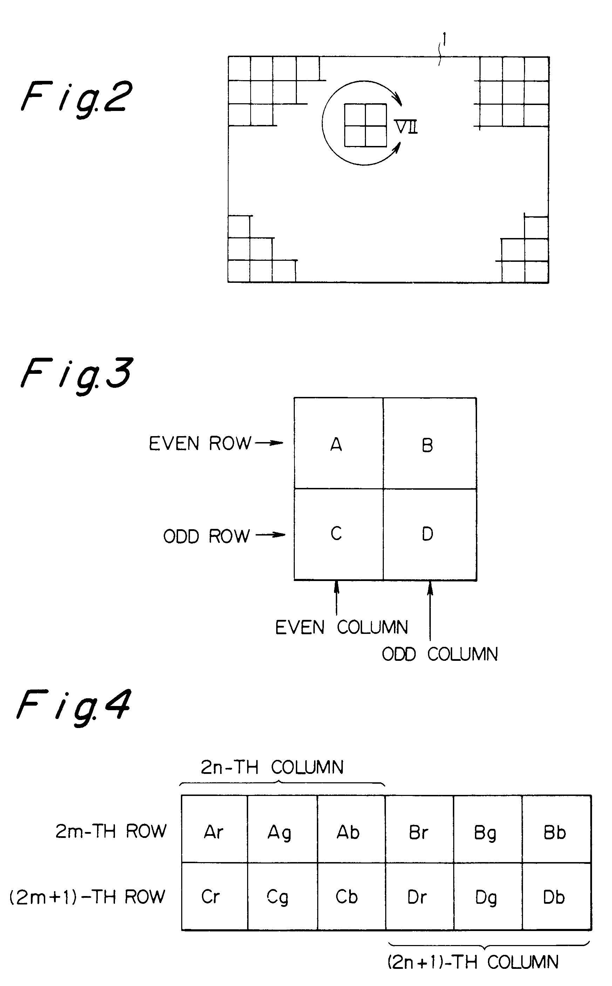

Fig. 1 is a table indicating a tone regulation (which describes the frames at which pixels are activated or the frames at which pixels are not activated) in case of assuming eight frames as one period in a monochromic tone display in terms of this method. As shown, 1 denotes a frame at which a pixel is activated and 0 denotes a frame at which a pixel is inactivated. Fig. 2 is a plan view exemplarily showing how to classify all pixels in a display cell 1 of a monochromic tone display device into groups. As shown in Fig. 2, one group consists of four pixels adjacent to each other as shown in a reference mark VII.

Fig. 3 is an expanded plan view exemplarily showing a pixel group marked by VII. In the classifying method as shown in Fig. 2, assuming that the pixel at an upper left corner is defined as 0 row and 0 column, in Fig. 3, two pixels A and B at an upper portion are assumed as an even row and two pixels C and D at a lower portion are assumed as an odd row. And, two pixels and C at a left column are assumed as an even column and two pixels B and D at a right column are assumed as an odd column.

For a 3/8 tone regulation shown in Fig. 1, the pixels A to D composing one group are activated equally three times but differently in the corresponding sequences of frames within a period of eight frames. And, the number of pixels to be activated in one group is one in a first frame and two in a second frame, and the regulations for these two frames are repeated in a third to a eighth frames. That is, on the overall display, 1/4 luminance and 2/4 luminance are alternately repeated at each frame, resulting in averaging all the luminances to reach a luminance of 3/8 within one period of eight frames. Further, the luminance is changed on a frequency which is half as long as a frame frequency. It means a relatively high value, which results in reducing flickers on screen.

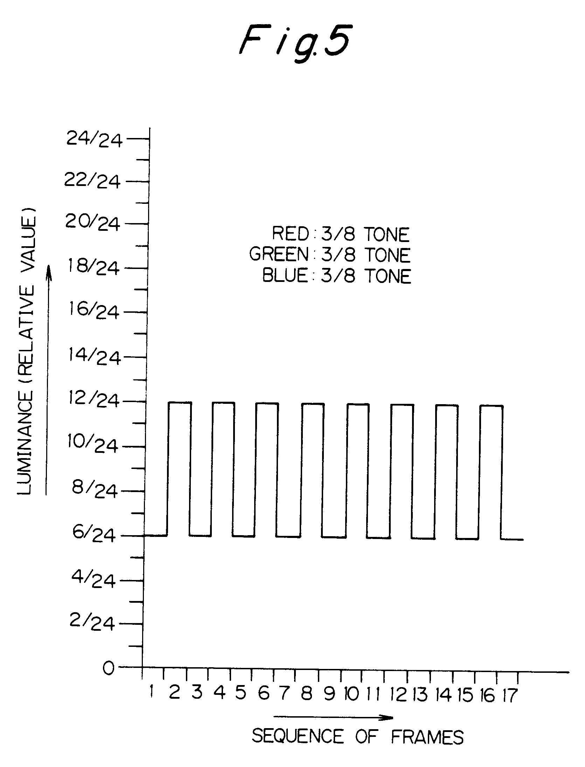

Fig. 4 is an expanded plan view exemplarily showing one combination of pixel groups in the display cell in case of applying the foregoing tone regulation to a tone display used in a color display device. In a monochrome display device, one pixel on the screen corresponds to one pixel on the display cell 1. In a color display device, on the other hand, the former one pixel corresponds to three pixels on the display cell, said three pixels being respectively responsible for three primary colors (herein, red, green, and blue used in the additive mixture of color stimuli). In the pixel group shown in Fig. 4, the pixel A shown in Fig. 3 corresponds to a group of pixels Ar, Ag, and Ab, which represent red, green, and blue, respectively, which are the primary three colors. Likewise, the pixel B corresponds to a group of pixels Br, Bg, and Bb, the pixel C corresponds to a group of pixels Cr, Cg, and Cb, and the pixels D corresponds to a group of pixels Dr, Dg, and Db. In the combination of the pixel groups shown in Fig. 4, the pixels Ar, Br, Cr, and Dr represent red, the pixels Ag, Bg, Cg, and Dg represents green, and the pixels Ab, Bb, Cb, and Db represent blue.

In the combination of the pixel groups shown in Fig. 4, assuming the group of three pixels, representing the three primary colors, at an upper left corner as 0 row and 0 column, all the pixels are classified in a manner that two groups of the pixels Ar, Ag, Ab, Br, Bg, and Bb at an upper portion correspond to a 2m-th row (even row, m is zero or a positive integer), two groups of pixels Cr, Cg, Cb, Dr, Dg, and Db at a lower portion correspond to a (2m + 1)-th row (odd row), two groups of pixels Ar, Ag, Ab, Cr, Cg, and Cb at a left half portion correspond to a 2n-th column (even column, n is zero or a positive integer), and two groups of pixels Br, Bg, Bb, Dr, Dg, and Db correspond to a (2n + 1)-th column (odd column).

And, the tone regulations for the pixels as shown in Fig. 1 are applied to the pixels shown in Fig. 4 in a manner that the tone regulation of the pixel A is applied to one group of the pixels Ar, Ag, and Ab, the tone regulation of the pixel B is applied to another group, of the pixels Br, Bg, and Bb, the tone regulation of the pixel C is applied to another group of the pixels Cr, Cg, and Cb, and the tone regulation of the pixel D is applied to the rest of another group of the pixels Dr, Dg, and Db.

If only a single primary color is displayed on screen, the color tone display based on the aforementioned tone regulation is substantially similar to the monochrome display. In this condition, hence, the foregoing method advantageously improves the reduction of the display quality due to flickers or some other defective phenomena viewed on screen.

In case of displaying an intermediate color mixed with the three primary colors at any tone, however, the driving method to which the foregoing method is applied results in impairing display quality as mentioned below even when the same color and luminance are realized on screen.

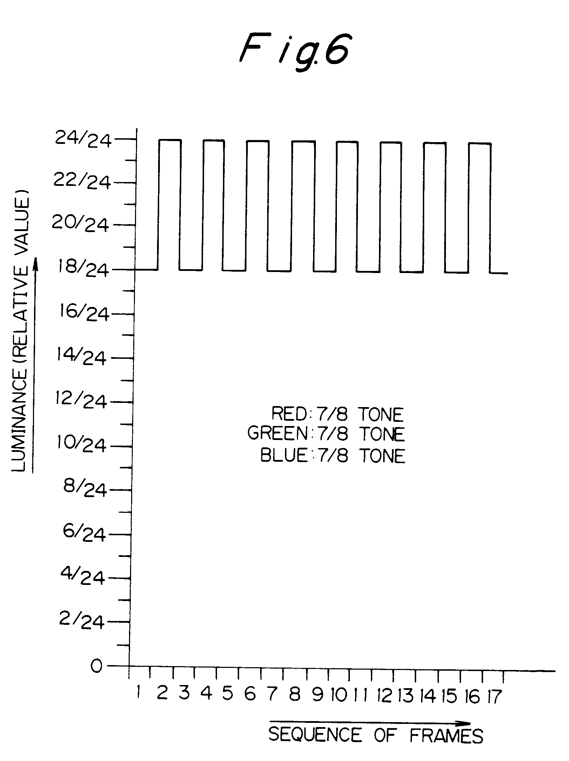

Fig. 5 is a graph exemplarily showing how a luminance is changed on screen in one combination as shown in Fig. 4, assumed when an intermediate color of the mixed three primary colors is displayed overall at 3/8 tone according to the tone regulations shown in Fig. 1. Fig. 6 is a graph exemplarily showing how a luminance is changed when displaying an intermediate color at 7/8 tone in the same manner.

In displaying the intermediate color at 3/8 tone shown in Fig. 5, the pixels Ar, Br, Cr, and Dr are responsible for red, the pixels Ag, Bg, Cg, and Dg are responsible for green, and the pixels Ab, Bb, Cb, and Db are responsible for blue, and all the pixels are displayed at 3/8 tone. Hence, the tone regulations of each pixel shown in Fig. 1 are related in a manner that the 3/8-tone regulation of the pixel A is applied to the pixel group of Ar, Ag, and Ab, the 3/8-tone regulation of the pixel B is applied to the pixel group of Br, Bg, and Bb, the 3/8-tone regulation of the pixel C is applied to the pixel group of Cr, Cg, and Cb, and the 3/8-tone regulation of the pixel D is applied to the pixel group of Dr, Dg, and Db.

As a result, one pixel group of Ar, Ag, and Ab is activated in the first frame, two pixel groups of Br, Bg, Bb, Cr, Cg, and Cb are activated in the second frame, one pixel group of Cr, Cg, and Cb is activated in the third frame, two pixel groups of Ar, Ag, Ab, Dr, Dg, and Db are activated in the fourth frame, one pixel group of Dr, Dg, and Db is activated in the fifth frame; two pixel groups of Br, Bg, Bb, Cr, Cg, and Cb are activated in the sixth frame, one pixel group of Br, Bg, and Bb is activated in the seventh frame, and two pixel groups of Ar, Ag, Ab, Dr, Dg, and Db are activated in the eighth frame. And the regulations in the first to the eighth frames are repeated in the subsequent frames. That is, in the first frame, three pixels are activated out of the twelve (12) pixels, thereby reaching 3/12 luminance (6/24), in the second frame, six pixels are activated, thereby reaching 6/12 luminance (12/24), and in the subsequent frames, the luminance change in the first to the second frames is repeated. It results in reaching the average luminance of 3/8 (9/24) on screen within the section of one period consisting of eight frames.

Like the monochromic tone display, this luminance change is based on the frequency which is half as long as the frame frequency. It means a relatively high value. However, the luminance change is thus made far larger, because the resulting amplitude of the luminance change is the overlapped amplitudes of luminances of those three simple primary colors. This larger luminance change results in making an absolute value of the change width of the amplitude larger than a threshold value on which a sight of a man starts to feel flickers on screen, thereby impairing the quality of the colour image displayed on the foregoing tone regulations.

Fig. 6 is a graph showing how a luminance is changed on screen in case of displaying an intermediate colour at 7/8 tone. In this display, the resulting amplitude of the luminance change between frames is the overlapped amplitudes of luminances of those three primary colours. Like the above, in the first frame, the luminance 18/24, and in the second frame, the luminance 24/24 are reached. In the subsequent frames, the luminance change in the first to the second frames is repeated.

### SUMMARY OF THE INVENTION

It is therefore an object of the present invention to provide a method for driving a colour display device which is capable of displaying on screen a colour image at a plurality of tones with excellent quality.

There is thus provided a method of driving a colour display device comprising a two-dimensional array of display areas,
each display area consisting of a plurality of pixels for producing a plurality of colours, said display device being capable of producing colour images of a plurality of tones, said method comprising the step of:
classifying the display areas into a plurality of contiguous groups of display areas,
characterized in that said method further comprises the step of activating the pixels of each group in response to desired display luminance data in such a way that the number of pixels activated in each frame of a predetermined number of frames remains substantially constant, pixels of the same colour in each group being activated in different sequences.

There is further provided an apparatus for driving a colour display device comprising a two-dimensional array of display areas, each display area consisting of a plurality of pixels for producing a plurality of colours, said display device being capable of producing colour images of a plurality tones, said apparatus comprising:
means for classifying the display areas into a plurality of contiguous groups of display areas,
characterized by means for activating the pixels of each group in response to desired display luminance data in such a way that the number of pixels activated in each frame of a predetermined number of frames remains substantially constant, and for activating pixels of the same colour in each group in different sequences.

According to the present invention flickers resulting from the variation of the amplitude of luminance change or the frequency of luminance change are advantageously reduced, thereby being able to realize excellent colour tone display.

Further objects and advantages of the present invention will be apparent from the following description of the preferred embodiments of the invention as illustrated in the accompanying drawings.

### BRIEF DESCRIPTION OF THE DRAWINGS

Fig. 1 is a table indicating a tone regulation assumed in a monochromic tone display according to a prior art;
Fig. 2 is a plan view exemplarily showing how to classify all pixels in a display cell of a monochromic tone display device into groups to which a driving method of the prior art is applied;
Fig. 3 is an expanded plan view exemplarily showing one group of pixels contained in the display cell;
Fig. 4 is an expanded plan view exemplarily showing one combination of pixel groups contained in the display cell in case of applying the driving method of the prior art to a color tone display;
Fig. 5 is a graph exemplarily showing how a luminance is changed in one combination of pixel groups in case of applying the driving method of the prior art to a color 3/8-tone display;
Fig. 6 is a graph exemplarily showing how a luminance is changed in one combination of pixel groups in case of applying the driving method of the prior art to a color 7/8-tone display;
Fig. 7 is a block diagram schematically showing a method for driving a color liquid-crystal display device according to an embodiment of the invention;
Fig. 8 is an expanded plan view exemplarily showing a display cell of the color liquid-crystal display device;
Fig. 9 is an expanded plan view exemplarily showing one combination of pixel groups contained in the display cell;
Fig. 10 is a table indicating tone regulations applied to a method for driving a color liquid-crystal display device according to the embodiment of the invention;
Fig. 11a to Fig. 11f models view showing tone regulations applied to the method for driving a color liquid-crystal display device;
Fig. 12 is a graph showing how a luminance is changed on the 3/8-tone regulation in one combination of pixel groups; and
Fig. 13 is a graph showing how a luminance is changed on the 7/8-tone regulation in one combination of pixel groups.

### DESCRIPTION OF THE PREFERRED EMBODIMENTS

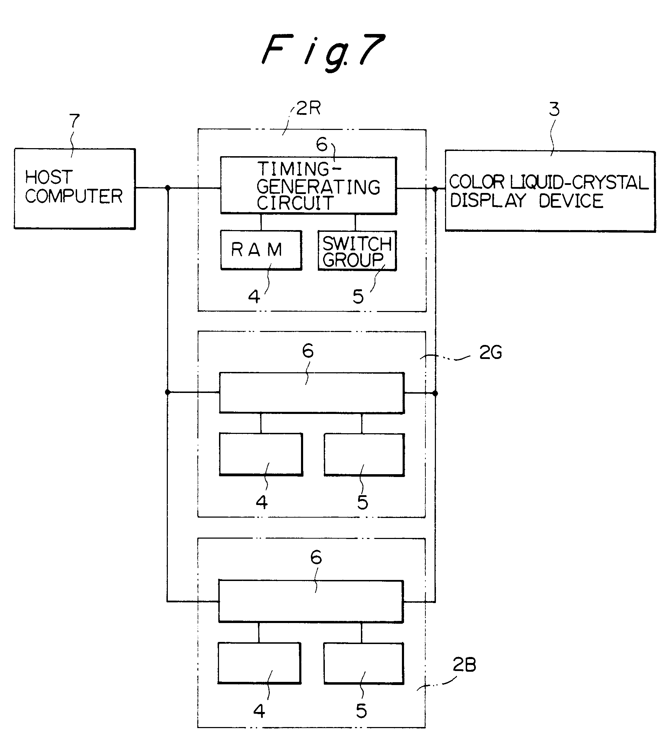

Fig. 7 is a block diagram schematically showing a method for driving a color liquid-crystal display device to which a driving method according to one embodiment of the invention is applied.

As shown in Fig. 7, 2R, 2G, and 2B denote controllers, which serve to control a color liquid-crystal display device 3 individually for three primary colors. Each of the controllers 2R, 2G, and 2B comprises a random access memory (referred to as a RAM) 4 for storing display data containing tone information, a switch group 5 for setting a tone regulation used for a frame-selecting method, and a timing-generating circuit 6 for generating a timing signal required for displaying an image on the color liquid-crystal display device 3. A host computer 7 is responsible for controlling the timing-generating circuit 6.

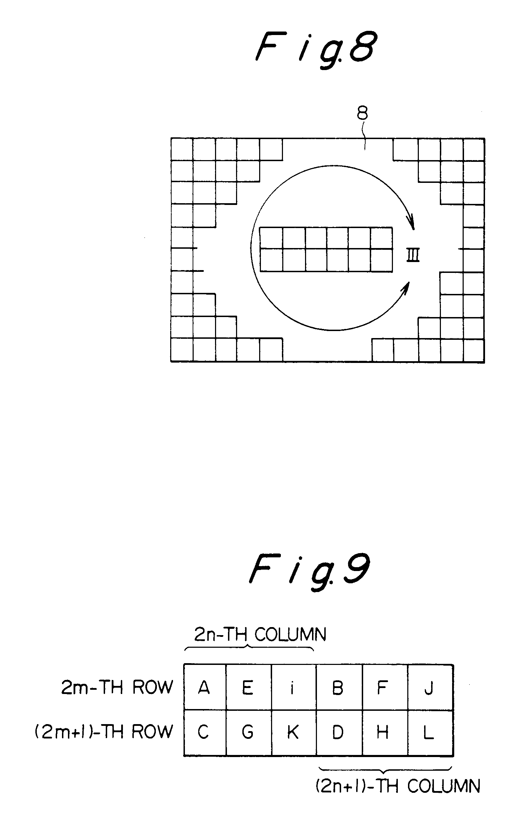

Fig. 8 is a plan view exemplarily showing a display cell 8 of the color liquid-crystal display device 3, the display cell 8 including a plurality of pixels arranged in a matrix manner. Fig. 9 is an expanded plan view exemplarily showing one combination of pixel groups marked by a reference mark III contained in the display cell 8.

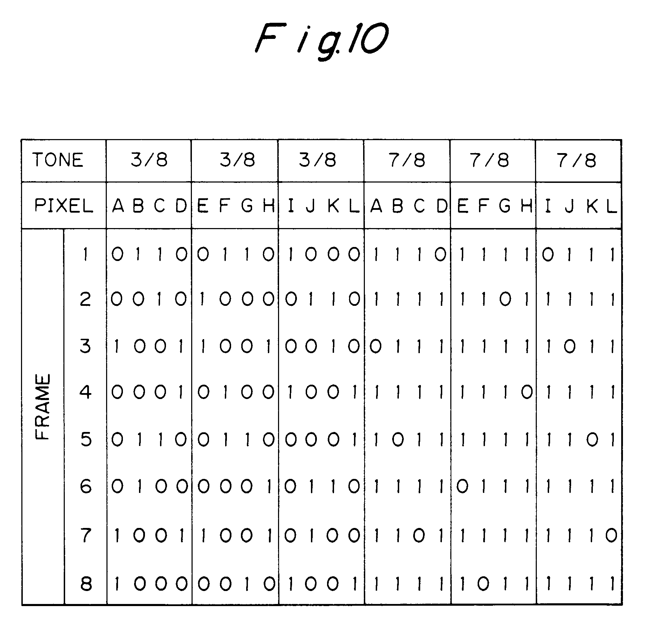

Fig. 10 is a table showing one example of tone regulations applied to a method for driving a color liquid-crystal display device. In this figure, 1 denotes "to activate" and 0 denotes "to inactivate".

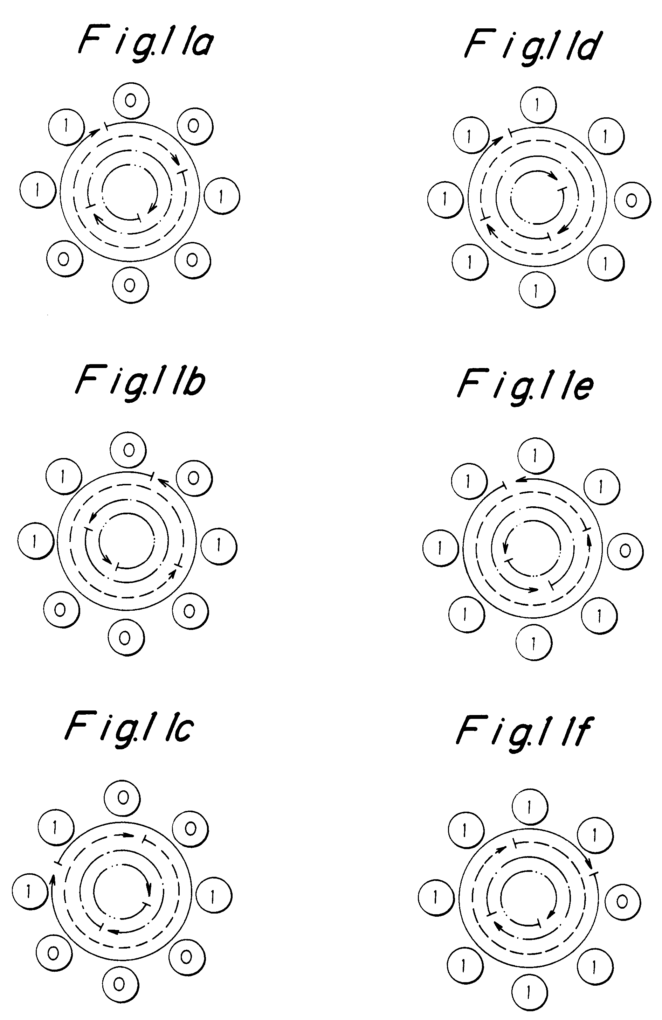

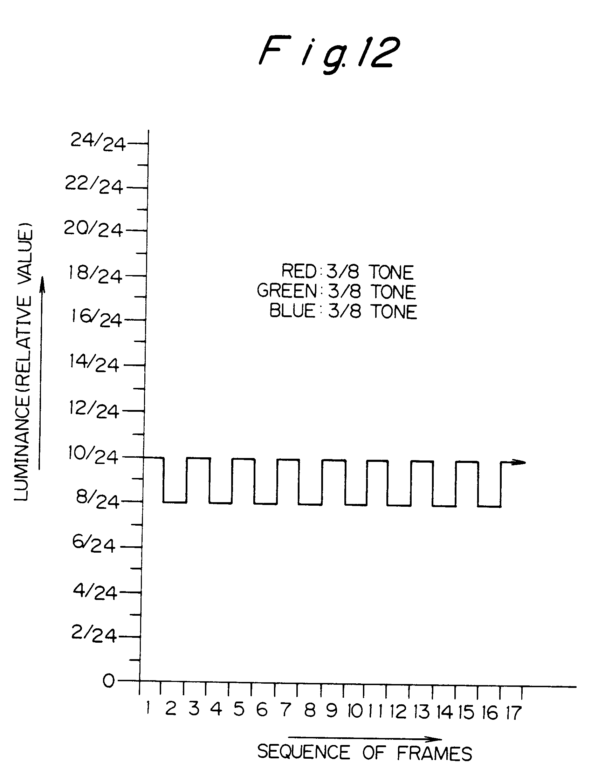

Fig. 11a to Fig. 11f are models view showing tone regulations to pixels A to L as shown in Fig. 10. Fig. 12 is a graph showing how a color liquid-crystal display device changes a luminance at each frame. With reference to Figs. 11a to 11f and 12, and operation in terms of the method for driving a color liquid-crystal display device will be described as below.

This embodiment is assumed to provide one period consisting of eight frames and allow a color image to be displayed at nine level tones of 0/8 tone (0 tone), 1/8 tone, 2/8 tone, 3/8 tone, 4/8 tone, 5/8 tone, 6/8 tone, 7/8 tone, and 8/8 tone (1 tone). Then, cases of displaying a color image at 3/8 and 7/8 tone in the combination of the pixels A to L shown in Fig. 9 will be described.

Assuming that a group of three pixels (arranged in a row) at an upper left corner of the display cell 8 shown in Fig. 8 is defined as a pixel group of 0 row and 0 column and these three pixels are respectively responsible for each of the three primary colors, a combination of the pixel groups shown in Fig. 9 can be defined in a manner that two pixel groups A, E, I, B, F, and J at an upper portion correspond to a 2m-th row on screen (even row, m denotes 0 or a positive integer), two pixel groups C, G, K, D, H, and L at a lower portion correspond to a (2m + 1)-th row on screen (odd row), two pixel groups A, E, I, C, G, and K at a left half portion correspond to a 2n-th column on screen (even column, n is 0 or a positive integer), and two pixel groups B, F, J, D, H, and L at a right half portion correspond to a (2N + 1)-th row on screen (odd column). In accordance with the arranging manner, all the pixels contained on the display cell 8 are classified into a number of combinations. In Fig. 9, pixels A, B, C, and D (red-specified pixels) are responsible for red, pixels E, F, G and H (green-specified pixels) are responsible for green, and pixels I, J, K, and L (blue-specified pixels) are responsible for blue.

Then, the switch group 5 shown in Fig. 7 serves to set the tone regulation shown in Fig. 10 to the pixels A to L.

If an intermediate color mixed with the three primary colors of red, green, and blue is displayed on screen at 3/8 tone, for example, each of the pixels A to L in one combination is equally activated three times (in three frames) within a section of the 8-frame period. It means that color-specified pixels (that is, each of color-specified pixels being responsible for one of red, green, and blue respectively) are displayed at 3/8 tone.

For the red-specified pixels A, B, C, and D in one combination, the switch group 5 of the controller 2R for red serves to set a tone regulation to allow those pixels to be respectively activated in different sequences of frames. Assuming that the sequence of the frames in which the pixel A is activated are ranged clockwise in a ring manner from the first to the eighth frames as shown by a real line in Fig. 11a, the tone regulations of the pixels A to D are defined as follows. On the condition that a pixel-B state in the first frame is assumed as a pixel-A state in the third frame, the sequence of frames in which the pixel B is activated is clockwise as shown by a broken line, that is, similar to that of frames in which the pixel A is activated. On the condition that a pixel-C state in the first frame is assumed as a pixel-A state in the seventh frame, the sequence of frames in which the pixel C is activated is clockwise as shown by an alternate long and short dash line, that is, similar to that for the pixel A. And on the condition that a pixel-D state in the first frame is assumed as a pixel-A state in the fifth frame, the sequence of frames in which the pixel D is activated is clockwise as shown by an alternate long and two short dashes line, that is, similar to that for the pixel A.

The switch group 5 of the controller 2G for green, on the other hand, serves to set a tone regulation in a manner that the green-specified pixels E, F, G, and H in the combination are allowed to be respectively activated in different sequences of frames. That is, the tone regulations of the pixels E to H are defined as follows. As shown in Fig. 11b, on the condition that a pixel-E state in the first frame is assumed as a pixel-A state in the first frame, the sequence of frames in which the pixel E is activated is counterclockwise as shown by a real line, that is, reverse to that of frames in which the pixel A is activated. On the condition that a pixel-F state in the first frame is assumed as a pixel-E state in the seventh frame, the sequence of frames in which the pixel F is activated is counterclockwise as shown by a broken line, that is, similar to that for the pixel E. On the condition that a pixel-G state in the first frame is assumed as a pixel-E in the third frame, the sequence of frames in which the pixel G is activated is counterclockwise as shown by an alternate long and short dash line, that is, similar to that for the pixel E. And on the condition that a pixel-H state in the first frame is assumed as a pixel-E state in the fifth frame, the sequence of frames in which the pixel H is activated is counterclockwise as shown by an alternate long and two short dashes line, that is, similar to that for the pixel E.

And, the switch group 5 of the controller 2B for blue on the other hand, serves to set a tone regulation in a manner that the blue-specified pixels I, J, K, and L in the combination are allowed to be respectively activated in the different sequences of frames. That is, the tone regulations of the pixels I to L are defined as follows. As shown in Fig. 11c, on the condition that a pixel-I state in the first frame is assumed as a pixel-A state in the eighth frame, the sequence of frames in which the pixel I is activated is clockwise as shown by a real line, that is, similar to that of frames in which the pixel A is activated. On the condition that a pixel-J state in the first frame is assumed as a pixel-I state in the third frame, the sequence of frames in which the pixel J is activated is clockwise as shown by a broken line, that is, similar to that for the pixel I. On the condition that a pixel-K state in the first frame is assumed as a pixel-I in the seventh frame, the sequence of frames in which the pixel K is activated is clockwise as shown by an alternate long and short dash line, that is, similar to that for the pixel I. And, on the condition that a pixel-L state in the first frame is assumed as a pixel-I state in the fifth frame, the sequence of frames in which the pixel L is activated is clockwise as shown by an alternate long and two short dashes line, that is, similar to that for the pixel I.

In accordance with the foregoing tone regulations, as shown in Fig. 12, five pixels of the twelve pixels A to L in the combination are activated in the first frame, thereby reaching the luminance of 5/12 (10/24) on the overall screen for which the combination is responsible. In the second frame, four pixels are activated, thereby reaching the luminance of 4/12 (8/24). In the subsequent frames, the luminance change in the first to the second frames is repeated. It results in reaching the average luminance of 3/8 (9/24) within a section of the 8-frame period in displaying an intermediate color.

The luminance change is based on a frequency which is half as long as the frame frequency. It means a relatively high value. It is thus possible to suppress flickers resulting from the frequency of the luminance change. And, this embodiment provides a variation of the amplitude of the luminance change between frames which is 1/3 as low as the foregoing related art shown in Fig. 5. It is thus possible to suppress flickers resulting from the amplitude of the luminance change. The reason why the variation of the amplitude of the luminance change is low is that the number of pixels to be activated at each frame is arranged to be substantially equal in one combination (herein, there are provided two cases, five pixels are activated and four pixels are activated).

Likewise, for displaying on screen ah intermediate color at 7/8 tone, all the pixels A to L in one combination are equally activated seven times (seven frames) within a section of the 8-frame period. That is, the pixels being responsible for red, green, and blue are respectively allowed to realize a 7/8-tone display.

For the red-specified pixels A, B, C, and D in one combination, the switch group 5 of the controller 2R for red serves to allow those pixels to be respectively activated in the different sequences of frames. Assuming that the frames in which the pixel A is activated are ranged clockwise in a ring manner from the first to the eighth frames as shown by a real line in Fig. 11d, the tone regulations of the pixels B to D are defined as follows. On the condition that a pixel-B state in the first frame is assumed as a pixel-A state in the seventh frame, the sequence of frames in which the pixel B is activated is clockwise as shown by a broken line, that is, similar to that of frames in which the pixel A is activated. On the condition that a pixel-C state in the first frame is assumed as a pixel-A state in the fifth frame, the sequence of frames in which the pixel C is activated is clockwise as shown by an alternate long and short dash line, that is, similar to that for the pixel A. And, on the condition that a pixel-D state in the first frame is assumed as a pixel-A state in the third frame, the sequence of frames in which the pixel D is activated is clockwise as shown by an alternate long and two short dashes line, that is, similar to that for the pixel A.

And, for the green-specified pixels E, F, G, and H in the combination, the switch group 5 of the controller 2G for green serves to allow those pixels to be respectively activated in the different sequences of frames. The tone regulations of the pixels A to D are defined as follows. As shown in Fig. 11e, on the condition that a pixel-E state in the first frame is assumed as a pixel-A state in the eighth frame, the sequence of frames in which the pixel E is activated is counterclockwise as shown by a real line, that is, reverse to that of frames in which the pixel A is activated. On the condition that a pixel-F state in the first frame is assumed as a pixel-E state in the seventh frame, the sequence of frames in which the pixel F is activated is counterclockwise as shown by a broken line, that is, similar to that for the pixel E. On the condition that a pixel-G state in the first frame is assumed as a pixel-E state in the fifth frame, the sequence of frames in which the pixel G is activated is counterclockwise as shown by an alternate long and short dash line, that is, similar to that for the pixel E. And, on the condition that an H-pixel state in the first frame is assumed as a pixel-E state in the third frame, the sequence of frames in which the pixel H is activated is counterclockwise as shown by an alternate long and two short dashes line, that is, similar to that for the pixel E.

And, for the blue-specified pixels I, J, K, and L in the combination, the switch group 5 of the controller 2B for blue serves to allow those pixels to be respectively activated in the different sequences of frames. The tone regulations of the pixels I to L are defined as follows. As shown in Fig. 11f, on the condition that a pixel-I state in the first frame is assumed as a pixel-A state in the third frame, the sequence of frames in which the pixel I is activated is clockwise as shown by a real line, that is, similar to that of frames in which the pixel A is activated. On the condition that a pixel-J state in the first frame is assumed as a pixel-I state in the seventh frame, the sequence of frames in which the pixel J is activated is clockwise as shown by a broken line, that is, similar to that for the pixel I. On the condition that a pixel-K state in the first frame is assumed as a pixel-I state in the fifth frame, the sequence of frames in which the pixel K is activated is clockwise as shown by an alternate long and short dash line, that is, similar to that for the pixel I. And, on the condition that a pixel-L state in the first frame is assumed as a pixel-I state in the third frame, the sequence of frames in which the pixel L is activated is clockwise as shown by an alternate long and two short dashes line, that is, similar to that for the pixel I.

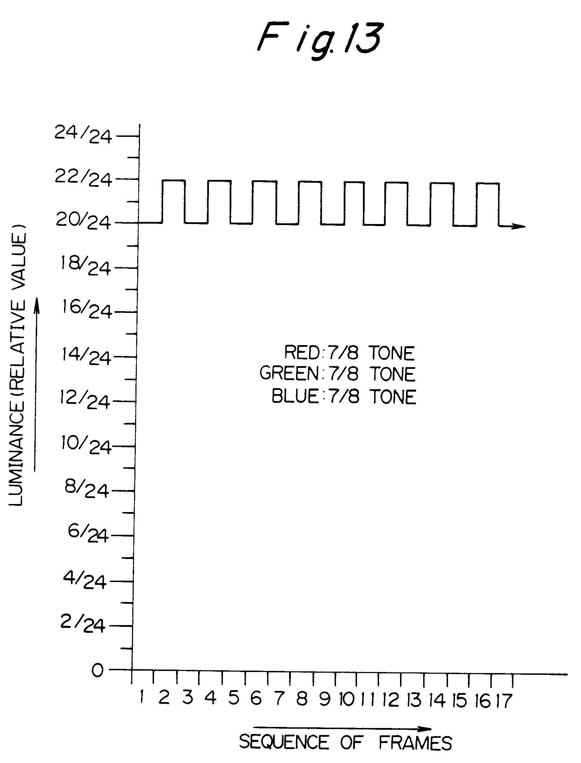

In accordance with the foregoing tone regulations, as shown in Fig. 13, ten pixels of the twelve pixels in one combination are activated in the first frame, thereby reaching the luminance of 10/12 (20/24) on the overall screen for which the combination is responsible. In the second frame, eleven pixels are activated, thereby reaching the luminance of 11/12 (22/24). In the subsequent frames, the luminance change in the first to the second frames is repeated. It results in reaching the average luminance of 7/8 (21/24) within a section of the 8-frame period when displaying an intermediate color.

The luminance change is based on a frequency which is half as long as the frame frequency. It means a relatively high value. It is thus possible to suppress flickers resulting from the frequency of the luminance change.

And, this embodiment provides a small variation of the amplitude of the luminance change between frames which is 1/3 as low as the foregoing related art shown in Fig. 6. It is thus possible to suppress flickers resulting from the amplitude of the luminance change.

According to the present embodiment, as mentioned above, it is quite easy to set the tone regulations to the pixels A to L which are responsible for each of the three primary colors. That is, as shown in Fig. 11a to Fig. 11f, the sequence of frames based on the predetermined tone regulation is shifted or reversed in order to generate respective tone regulations.

As shown in Fig. 10, each four pixels of the twelve pixels in one combination, which are responsible for each of three primary color, are allowed to be activated on respective tone regulations. And, the number of pixels to be activated at each frame are arranged to be substantially equal. (For the 3/8-tone display, the red-specified four pixels A to D provides two cases that two pixels are activated and one pixel is activated.) Hence, no flicker is generated in case of displaying on screen the simple primary color at any tone.

In addition, the switch group 5 included in the method for driving the color liquid-crystal display device, shown in Fig. 7, can be replaced with a storage cell such as a ROM (Read-only Memory) or PROM (Programmable ROM) or a resistor connected to a power source or the ground.

Moreover, it is possible to remove the RAM 4 if the tone display data can be directly entered from the host computer 7 to the timing-generating circuit 6 in order to drive the color liquid-crystal display device 3.

Many widely different embodiments of the present invention may be constructed without departing from the spirit of scope of the present invention. It should be understood that the present invention is not limited to the specific embodiments described in the specification, except as defined in the appended claims.

There are described above novel features which the skilled man will appreciate give rise to advantages. These are each independent aspects of the invention to be covered by the present application, irrespective of whether or not they are included within the scope of the following claims.

## Claims

1. A method of driving a colour display device (3) comprising a two-dimensional array of display areas ((A,E,i), (B,F,J), (C,G,K); (D,H,L)), each display area consisting of a plurality of pixels (A,E,i,B,F,J,C,G,K,D,H,L) for producing a plurality of colours, said display device (3) being capable of producing colour images of a plurality of tones, said method comprising the step of:
classifying the display areas into a plurality of contiguous groups (III) of display areas,
characterized in that
said method further comprises the step of
activating the pixels of each group in response to desired display luminance data in such a way that the number of pixels activated in each frame of a predetermined number of frames remains substantially constant whilst pixels of the same colour in each group are activated in different sequences.

2. A method as claimed in Claim 1, wherein the predetermined number of frames is eight frames.

3. A method as claimed in Claim 1 or 2 wherein said plurality of tones comprise the nine tones of 0/8 tone, 1/8 tone, 2/8 tone, 3/8 tone, 4/8 tone, 5/8 tone, 6/8 tone, 7/8 tone, and 8/8 tone.

4. A method as claimed in any one of Claims 1 to 3 wherein said pixels of the same colour in each group are activated in accordance with data in a tone regulation table.

5. An apparatus for driving a colour display device (3) comprising a two-dimensional array of display areas ((A,E,i), (B,F,J), (C,G,K), (D,H,L)), each display area consisting of a plurality of pixels (A,E,i,B,F,j,C,G,K,D,H,L) for producing a plurality of colours, said display device (3) being capable of producing colour images of a plurality of tones, said apparatus comprising:
means for classifying the display areas into a plurality of contiguous groups (III) of display areas,
characterized by means (2R,2G,2B) for activating the pixels of each group in response to desired display luminance data in such a way that the number of pixels activated in each frame of a predetermined number of frames remains substantially constant whilst pixels of the same colour in each group are activated in different sequences.

6. An apparatus as claimed in Claim 5, wherein said predetermined number of frames is eight frames.

7. An apparatus as claimed in Claim 5 or 6, wherein said colour display device (3) is a colour liquid-crystal display device.

8. An apparatus as claimed in any one of Claims 5 to 7, wherein said plurality of tones comprise the nine tones of 0/8 tone, 1/8 tone, 2/8 tone, 3/8 tone, 4/8 tone, 5/8 tone, 6/8 tone, 7/8 tone, and 8/8 tone.

9. An apparatus as claimed in any one of Claims 5 to 8 wherein said pixels of the same colour in each group are activated in accordance with data in a tone regulation table.

10. An apparatus as claimed in Claim 9, wherein said driving apparatus comprises three controllers (2R,2G,2B) for controlling said colour liquid-crystal display device (3) respectively for three primary colours, each of said three controllers (2R,2G,2B) including random access memory (4) for storing display data containing tone information, switch groups (5) for setting the data of the tone regulation table and timing-generating circuits (6) for generating a timing signal required for displaying an image on said colour liquid-crystal display device (3).

## Patentansprüche

1. Verfahren zum Steuern einer Farbanzeigevorrichtung (3) mit einer zweidimensionalen Anordnung von Anzeigebereichen ((A, E, I), (B, F, J), (C, G, K), (D, H, L)), von denen jeder aus mehreren Pixeln (A, E, I, B, F, J, C, G, K, D, H, L) zum Erzeugen mehrerer Farben besteht, wobei die Anzeigevorrichtung (3) Farbbilder mit mehreren Farbtönen erzeugen kann, wobei das Verfahren folgenden Schritt aufweist:
- Einteilen der Anzeigebereiche in mehrere zusammenhängende Gruppen (III) von Anzeigebereichen;
**dadurch gekennzeichnet,** daß das Verfahren ferner den folgenden Schritt beinhaltet:
- Aktivieren der Pixel jeder Gruppe auf Luminanzdaten für eine gewünschte Anzeige hin in solcher Weise, daß die Anzahl der Pixel, die in jedem Vollbild unter einer vorgegebenen Anzahl von Vollbildern aktiviert wird, im wesentlichen konstant bleibt, während die Pixel derselben Farbe in jeder Gruppe mit verschiedenen Folgen aktiviert werden.

2. Verfahren nach Anspruch 1, bei dem die vorgegebene Anzahl von Vollbildern acht Vollbilder beträgt.

3. Verfahren nach einem der Ansprüche 1 oder 2, bei dem die mehreren Farbtöne die folgenden neun Farbtöne umfassen: Farbton 0/8, Farbton 1/8, Farbton 2/8, Farbton 3/8, Farbton 4/8, Farbton 5/8, Farbton 6/8, Farbton 7/8 und Farbton 8/8.

4. Verfahren nach einem der Ansprüche 1 bis 3, bei dem die Pixel derselben Farbe in jeder Gruppe gemäß Daten in einer Farbton-Einstelltabelle aktiviert werden.

5. Vorrichtung zum Steuern einer Farbanzeigevorrichtung (3) mit einer zweidimensionalen Anordnung von Anzeigebereichen ((A, E, I), (B, F, J), (C, G, K), (D, H, L)), von denen jeder aus mehreren Pixeln (A, E, I, B, F, J, C, G, K, D, H, L) zum Erzeugen mehrerer Farben besteht, wobei die Anzeigevorrichtung (3) Farbbilder mit mehreren Farbtönen erzeugen kann, welche Vorrichtung folgendes aufweist:
- eine Einrichtung zum Einteilen der Anzeigebereiche in mehrere zusammenhängende Gruppen (III) von Anzeigebereichen;
**dadurch gekennzeichnet,**
- eine Einrichtung zum Aktivieren Aktivieren der Pixel jeder Gruppe auf Luminanzdaten für eine gewünschte Anzeige hin in solcher Weise, daß die Anzahl der Pixel, die in jedem Vollbild unter einer vorgegebenen Anzahl von Vollbildern aktiviert wird, im wesentlichen konstant bleibt, während die Pixel derselben Farbe in jeder Gruppe mit verschiedenen Folgen aktiviert werden.

6. Vorrichtung nach Anspruch 5, bei der die vorgegebene Anzahl von Vollbildern acht Vollbilder beträgt.

7. Vorrichtung nach einem der Ansprüche 5 oder 6, bei der die Farbanzeigevorrichtung (3) eine Flüssigkristall-Farbanzeigevorrichtung ist.

8. Vorrichtung nach einem der Ansprüche 5 oder 7, bei der die mehreren Farbtöne die folgenden neun Farbtöne umfassen: Farbton 0/8, Farbton 1/8, Farbton 2/8, Farbton 3/8, Farbton 4/8, Farbton 5/8, Farbton 6/8, Farbton 7/8 und Farbton 8/8.

9. Vorrichtung nach einem der Ansprüche 5 bis 8, bei der die Pixel derselben Farbe in jeder Gruppe gemäß Daten in einer Farbton-Einstelltabelle aktiviert werden.

10. Vorrichtung nach Anspruch 9, die drei Steuerungen (2R, 2G, 2B) zum Ansteuern der Flüssigkristall-Farbanzeigevorrichtung (3) für jeweils drei Primärfarben beinhaltet, wobei jede der drei Steuerungen (2R, 2G, 2B) einen Direktzugriffsspeicher (4) zum Abspeichern von Farbtoninformation enthaltenden Anzeigedaten, Schaltergruppen (5) zum Einstellen der Daten aus der Farbton-Einstellungstabelle sowie Synchronisiersignal-Erzeugungsschaltungen (6) zum Erzeugen eines Synchronisiersignals, wie es zum Anzeigen eines Bilds auf der Flüssigkristall-Farbanzeigevorrichtung (3) erforderlich ist, aufweist.

## Revendications

1. Méthode de commande d'un dispositif d'affichage couleur (3) comprenant un réseau bidimensionel de zones d'affichage ((A, E, i), (B, F, J), (C, G, K), (D, H, L)), chaque zone d'affichage étant constituée de multiples pixels (A, E, i, B, F, J, C, G, K, D, H, L) pour produire de multiples couleurs, ledit dispositif d'affichage (3) étant capable de produire des images en couleurs ayant de multiples nuances, ladite méthode comprenant l'étape qui consiste à :
classer les zones d'affichage en de multiples groupes contigus (III) de zones d'affichage,
caractérisée en ce que
ladite méthode comprend, en outre, l'étape qui consiste à activer les pixels de chaque groupe en réponse à des données de luminance d'affichage voulues de telle façon que le nombre de pixels activés dans chaque trame d'un nombre prédéterminé de trames reste sensiblement constant, tandis que des pixels de la même couleur dans chaque groupe sont activés suivant des séquences différentes.

2. Méthode telle que définie dans la revendication 1, selon laquelle le nombre prédéterminé de trames est égal à huit.

3. Méthode telle que définie dans la revendication 1 ou 2, selon laquelle lesdites multiples nuances comprennent les neuf nuances qui se composent d'une nuance 0/8, d'une nuance 1/8, d'une nuance 2/8, d'une nuance 3/8, d'une nuance 4/8, d'une nuance 5/8, d'une nuance 6/8, d'une nuance 7/8, et d'une nuance 8/8.

4. Méthode telle que définie dans l'une quelconque des revendications 1 à 3, selon laquelle lesdits pixels de la même couleur dans chaque groupe sont activés en fonction de données contenues dans une table de réglages de nuances.

5. Appareil de commande d'un dispositif d'affichage couleur (3) comprenant un réseau bidimensionnel de zones d'affichage ((A, E, i), (B, F, J), (C, G, K), (D, H, L)), chaque zone d'affichage étant constituée de multiples pixels (A, E, i, B, F, J, C, G, K, D, H, L) pour produire de multiples couleurs, ledit dispositif d'affichage (3) étant capable de produire des images en couleurs ayant de multiples nuances, ledit appareil comprenant :
des moyens pour classer les zones d'affichage en de multiples groupes contigus (III) de zones d'affichage,
caractérisé par des moyens (2R, 2G, 2B) pour activer les pixels de chaque groupe en réponse à des données de luminance d'affichage voulues de telle façon que le nombre de pixels activés dans chaque trame d'un nombre prédéterminé de trames reste sensiblement constant, tandis que des pixels de la même couleur dans chaque groupe sont activés suivant des séquences différentes.

6. Appareil tel que défini dans la revendication 5, dans lequel ledit nombre prédéterminé de trames est égal à huit.

7. Appareil tel que défini dans la revendication 5 ou 6, dans lequel ledit dispositif d'affichage couleur (3) est un dispositif d'affichage couleur à cristaux liquides.

8. Appareil tel que défini dans l'une quelconque des revendications 5 à 7, dans lequel lesdites multiples nuances comprennent les neuf nuances qui se composent d'une nuance 0/8, d'une nuance 1/8, d'une nuance 2/8, d'une nuance 3/8, d'une nuance 4/8, d'une nuance 5/8, d'une nuance 6/8, d'une nuance 7/8, et d'une nuance 8/8.

9. Appareil tel que défini dans l'une quelconque des revendications 5 à 8, dans lequel lesdits pixels de la même couleur dans chaque groupe sont activés conformément à des données contenues dans une table de réglages de nuances.

10. Appareil tel que défini dans la revendication 9, dans lequel ledit appareil de commande comprend trois organes de commande (2R, 2G, 2B) pour commander ledit dispositif d'affichage couleur à cristaux liquides (3) pour les trois couleurs primaires respectivement, chacun desdits trois organes de commande (2R, 2G, 2B) comprenant une mémoire vive (4) pour mémoriser des données d'affichage contenant des informations de nuances, des groupes de commutation (5) pour définir les données de la table de réglage de nuances, et des circuits générateurs de cadencement (6) pour générer un signal de cadencement nécessaire pour afficher une image sur ledit dispositif d'affichage couleur à cristaux liquides (3).
